# EUROPÄISCHE PATENTSCHRIFT

(11) **EP 2 747 256 B1**
(45) Veröffentlichungstag und Bekanntmachung des Hinweises auf die Patenterteilung: **09.01.2019**
(21) Anmeldenummer: 12008423.1
(22) Anmeldetag: 19.12.2012
(51) Int. Cl.: H02K 15/03, H02K 1/27

(54) **Verfahren zur Herstellung eines Rotors für einen Elektromotor**
Method for manufacturing a rotor for an electric motor
Procédé de fabrication d'un rotor pour un moteur électrique

(43) Veröffentlichungstag der Anmeldung: 25.06.2014
(73) Patentinhaber: LEANTEC Motor GmbH & Co. KG, 07318 Saalfeld (DE)
(72) Erfinder: Schnöll, Josef, 80686 München (DE)
(74) Vertreter: Steiniger, Carmen

(56) Entgegenhaltungen:
- EP-A2- 1 111 756
- DE-A1-102008 050 832
- US-A1- 2012 313 461

## Beschreibung

Die Erfindung betrifft ein Verfahren zur Herstellung eines Rotorkörpers sowie einen entsprechenden Rotorkörper und einen Rotor mit einem solchen Rotorkörper.

Aus der DE 10 2006 036 707 B3 ist ein trägheitsarmer Elektroantrieb mit einem Permanentmagnete tragenden Rotorkörper bekannt. Der Rotorkörper wird beispielsweise aus einem faserverstärkten Kunststoff gefertigt und mit Aufnahmen oder Ausschnitten zum Einsetzen der Permanentmagnete versehen. Die Befestigung der Permanentmagnete kann z. B. durch Klebung erfolgen.

Nachteilig an der oben beschriebenen Methode zur Fertigung des Rotorkörpers ist, dass der Rotorkörper zunächst vollflächig hergestellt wird und die Aufnahmen für die Permanentmagnete erst nachträglich durch eine spanabhebende Bearbeitung, beispielsweise Bohren, Fräsen oder Wasserstrahlschneiden, erstellt werden. Der Rotorkörper ist daher nicht in einem durchgängigen Prozess herstellbar.

Die Druckschrift US 2012/0313461 beinhaltet ein Verfahren zum Herstellen eines Rotors. Dabei wird zunächst eine Rotorwelle gefertigt, indem Kohlefaserbündel zu einer Matte geflochten und diese Matte nachfolgend zu der zylindrischen Rotorwelle aufgerollt wird. Die Matte kann hierbei breitere und schmalere Abschnitte aufweisen, sodass die aufgerollte Rotorwelle beispielsweise in einem Mittelbereich verdickt und außen dünner ist. In dem schmalen Abschnitt der Matte können ausgeschnittene Bereiche vorgesehen sein, die dann in dem verdickten Mittelbereich der Rotorwelle Hohlkammern ausbilden. Daraufhin wird eine kurze Röhre um den Mittelbereich der Rotorwelle aufgebracht und die ausgebildete Rotorwelle danach so in ein rohrförmiges Magnetjoch eingebracht, dass die Röhre das Magnetjoch überlappt. Dann wird ein Magnet in das Magnetjoch eingebracht und zu einem Permanentmagneten magnetisiert. Abschließend werden der Magnet und die Rotorwelle durch Harzinjektionsformen miteinander verbunden.

In der Druckschrift EP 1 111 756 A2 wird vorgeschlagen, Permanentmagnete eines Rotors in den Trägerwerkstoff des Rotors einzubetten. Hierfür können die Permanentmagnete in ein Geflecht oder Gewirke aus Gewebelagen eingebunden werden. Die vernähten oder verwobenen Gewebelagen können aus einem glas- oder kohlefaserverstärkten Kunststoff bestehen.

In der Druckschrift DE 10 2008 050 832 A1 ist ein Rotor mit einem Rotorhauptkörper aus Carbonfaserverbundmaterial beschrieben, welcher Aufnahmen für Magnete umfasst. Der Rotorhauptkörper wird in einer Negativform, in deren Aussparungen Carbonfasern abgelegt und Epoxidharz eingebracht werden, unter Einwirkung von Druck und Temperatur hergestellt.
Aufgabe vorliegender Erfindung ist es, ein verbessertes Verfahren zur Herstellung eines Rotorkörpers mit Aufnahmen für Magnete vorzuschlagen. Insbesondere soll keine Nachbearbeitung des Rotorkörpers zur Herstellung der Aufnahmen notwendig sein.

Diese Aufgabe wird durch das in Anspruch 1 definierte erfindungsgemässe Verfahren zur Herstellung eines Rotorkörpers gelöst, welches dadurch gekennzeichnet ist, dass aus Fasermaterial ein oder mehrere Faserbänder gefertigt werden, wobei in dem oder den Faserbändern Aussparungen vorgesehen werden, und dass das Faserband oder die Faserbänder so ausgerichtet werden, dass mindestens eine der Aussparungen auf einer anderen der Aussparungen liegt, so dass übereinander liegende Aussparungen eine dreidimensionale Aufnahme für Magnete bilden.
Erfindungsgemäß wird der Rotorkörper aus einem oder mehreren Faserbändern aufgebaut. Hierzu wird / werden aus Fasermaterial zunächst ein Faserband oder mehrere Faserbänder gefertigt, welche ein oder mehrere Aussparungen, d.h.

Öffnungen, Einschnitte oder Löcher, aufweisen. Das oder die Faserbänder werden dann so zueinander ausgerichtet, insbesondere auf- und/oder nebeneinander gelegt und/oder gefaltet, dass ein Teil der Aussparungen aufeinander zu liegen kommt. Mehrere übereinander liegende Aussparungen in dem oder den Faserbändern bilden einen dreidimensionalen Hohlraum, der als Aufnahme für einen Magneten dient.

Ein erfindungsgemäß eingesetztes Faserband wird vorzugsweise durch Weben gefertigt. Von Vorteil wird zur Fertigung der Faserbänder die aus der Textilfertigung bekannte Umkehrschusstechnologie eingesetzt. Mindestens zwei Fasern des Fasermaterials werden miteinander verkreuzt. In der Regel bilden mehrere Fasern (Kettfasern) einen Träger in den weitere Fasern (Schussfasern) quer zu den Kettfasem eingezogen werden. Kettfasern und Schussfasern können hierbei einen nahezu beliebigen Winkel zueinander einnehmen, beispielsweise einen Winkel von 90°, 60°, 45°oder 30°.

Unterschiedliche Bereiche des Rotorkörpers sind beim Einsatz des daraus hergestellten Rotors unterschiedlichen Beanspruchungen ausgesetzt. Es ist daher günstig, die Kett- und Schussfasern in verschiedenen Bereichen des Faserbandes unterschiedlich miteinander zu verweben, insbesondere deren winklige Ausrichtung zueinander oder die Webdichte zu variieren, um den unterschiedlichen Beanspruchungen des herzustellenden Rotorkörpers Rechnung zu tragen. Es ist beispielsweise günstig, in einem Randbereich des Faserbandes eine größere Faserdichte, das heißt eine höhere Anzahl von Fasern pro Volumen, als die durchschnittliche Faserdichte des Faserbandes vorzusehen.

Die Aussparungen in dem Faserband können direkt durch Weben hergestellt werden. Das Fasermaterial wird so miteinander verwebt, dass die Aussparungen an den gewünschten Stellen entstehen.

In einer anderen Variante der Erfindung wird zunächst ein Faserband ohne Aussparungen gewebt. Anschließend werden die Fasern des Faserbandes so gegeneinander verschoben, dass sich die gewünschten Aussparungen in dem Faserband bilden. Hierzu kann beispielsweise in dem Bereich des Faserbandes, in dem eine Aussaprung entstehen soll, das Fasermaterial lockerer verwebt sein, so dass nach dem Weben die Fasern leichter gegeneinander bewegt werden können.

Die Faserbänder können nicht nur durch Weben, sondern auch durch Wirken oder Flechten hergestellt werden. Als Fasermaterial können Karbonfasern, Glasfasern oder Aramidfasern, Basaltfasern oder anderweitige Chemie- und Naturfasern, Fasern aus synthetischen Polymeren oder industriell erzeugt anorganische Fasern eingesetzt werden.

Von Vorteil wird das oder werden die Faserbänder so gefertigt, dass diese bereits Aussparungen aufweisen. Beim Weben der Faserbänder kann dies beispielsweise dadurch erfolgen, dass die Schussfasern nur durch einen Teil der Kettfasern gezogen werden. Das gefertigte Faserband besitzt somit eine Vielzahl von Aussparungen Löchern, Öffnungen oder Ausschnitten.

In einer Ausführungsform der Erfindung werden mehrere ringsegment-förmige, kreisringförmige, segmentförmige oder kreisförmige Faserbänder mit jeweils ein oder mehreren Aussparungen gefertigt. Die Faserbänder werden nebeneinander und/oder übereinander gelegt bzw. in geeigneter Weise zueinander ausgerichtet, so dass jeweils ein Teil der Aussparungen in den Faserbändern zusammen eine Aufnahme für einen Magneten bildet. Durch die Verwendung von ringsegment-förmigen, kreisringförmigen, segmentförmigen und/oder kreisförmigen Faserbändern kann auf einfache Weise ein runder Rotorkörper hergestellt werden.

In einer anderen Ausführungsform wird ein schraubenförmiges Faserband mit mehreren Aussparungen gefertigt. Unter dem Begriff "schraubenförmiges Faserband" wird ein Faserband verstanden, welches sich in Form einer Helix, Schraube oder zylindrischen Spirale um den Mantel eines gedachten Zylinders windet. Das schraubenförmige Faserband wird in mehreren Lagen übereinander gelegt, wobei die Aussparungen in dem Faserband so vorgesehen sind, dass bei dem Aufeinanderlegen des Faserbands zumindest je zwei Aussparungen im Wesentlichen deckungsgleich übereinander liegen. Beim Fertigen des schraubenförmigen Faserbands werden also jeweils mindestens zwei Aussparungen unter einem Winkel von 360° zueinander angeordnet, so dass sich die eine Aussparung nach einer vollen Umdrehung des Faserbands auf der anderen Aussparung befindet.

Der erfindungsgemäß hergestellte Rotorkörper wird bevorzugt in einem Rotor eines Elektromotors eingesetzt und soll eine Vielzahl von gleichmäßig verteilten Magneten aufweisen. In dem Faserband werden daher entsprechend viele Aussparungen vorgesehen. Beispielsweise wird nach jeweils 10° eine Aussparung in das Faserband eingebracht oder das Faserband wird so gefertigt, dass dieses alle 10° eine Aussparung aufweist. Ein kreisringförmiges Faserband besitzt dann 36 Aussparungen. Werden mehrere solcher Faserbänder so aufeinander gelegt, dass deren Aussparungen direkt übereinander liegen, so bilden sich die gewünschten Aufnahmen. Bei der oben beschriebenen Variante mit einem schraubenförmigen Faserband kommt eine Aussparung mit einer um 360° versetzten Aussparung zur Deckung.

Die Verwendung eines schraubenförmigen Faserbands hat den Vorteil, dass der Rotorkörper in einem Prozessschritt dadurch hergestellt werden kann, dass das Faserband solange aufeinander gelegt wird, bis der Rotorkörper die gewünschte Dicke aufweist. In einem Arbeitsgang kann so der Rotorkörper in der gewünschten Dicke gefertigt werden. Wenn die Aussparungen geeignet in das Faserband eingebracht wurden, liegen diese beim Aufeinanderlegen des Faserbands automatisch direkt übereinander.

Es ist zu beachten, dass die gewünschte Dicke des Endproduktes in der Regel nicht gleich der Dicke des aufeinandergelegten Faserbandes ist. Wird das aufeinandergelegte Faserband nämlich in einem weiteren Verfahrensschritt verpresst, verringert sich die Dicke deutlich. So muss das Faserband zum Beispiel zu einer um etwa 30% höheren Dicke als die gewünschte Dicke des fertigen Rotorkörpers gelegt werden, um nach dem Verpressen das gewünschte Endmass zu erhalten.

Es ist auch möglich, den Rotorkörper aus mehreren schraubenförmigen Faserbändern zu fertigen. Jedes der schraubenförmigen Faserbänder wird hierbei nur soweit aufeinander gelegt, dass sich ein Teil der gewünschten Dicke des Rotorkörpers ergibt. Die aus jeweils einem Faserband erzeugten Bauteile werden dann zu dem endgültigen Rotorkörper zusammengesetzt.

Beispielsweise können aus je einem schraubenförmigen Faserband ohne Aussparungen zwei dünne zylindrische Abdeckungen hergestellt werden. Aus einem weiteren Faserband mit Aussparungen wird der zentrale Teil des Rotorkörpers gefertigt, wobei die Aussparungen so vorgesehen sind, dass diese teilweise aufeinander liegen und Aufnahmen für Magnete bilden. In diese Aufnahmen werden Magnete eingelegt. Die beiden dünnen zylindrischen Abdeckungen werden beidseits des zentralen Teils des Rotorkörpers mit den Magneten angeordnet und mit dem zentralen Teil verbunden, so dass die Magnete fest in ihrer Position in der jeweiligen Aufnahme fixiert sind. Mit anderen Worten: Es werden aus dem Faserband zwei Decklagen ohne Aussparungen sowie ein zentrales Rotorkörperteil mit Aussparungen hergestellt. Aus den beiden Decklagen und dem zentralen Rotorkörperteil wird dann in einer Sandwich Konstruktion der Rotorkörper aufgebaut. Die beiden Decklagen bedecken dabei vollfächig das zentrale Rotorkörperteil mt den Aussparungen, wodurch die Steifigkeit des kompletten Rotorkörpers erhöht wird.

Beim Ausrichten eines schraubenförmigen Faserbands zur Herstellung des Rotorkörpers kommt eine der Aussparungen in einem Teil des Faserbands auf einer der Aussparungen in einem anderen Teil des Faserbands zu liegen. Werden anstelle eines schraubenförmigen Faserbands mehrere, beispielsweise kreisringsegmentförmige oder ringförmige Faserbänder verwendet, so werden diese so ausgerichtet, dass eine der Aussparungen in einem Faserband auf einer Aussparung in einem anderen Faserband liegt.

Von Vorteil wird das Faserband oder werden die Faserbänder in eine Kavität eingebracht werden. Die Kavität stellt eine Negativform des gewünschten Rotorkörpers dar. Durch die Kavität wird sichergestellt, dass der durch Anordnung und Ausrichtung der Faserbänder oder des Faserbands erzeugte Rotorkörper auch die gewünschte Größe und Form aufweist. Durch die Kavität wird die Fertigung des Rotorkörpers deutlich erleichtert.

Die Ausrichtung der Aussparungen in dem oder den Faserbändern zueinander, beispielsweise ein deckungsgleiches Übereinanderlegen von zwei Aussparungen, wird in einer bevorzugten Ausführungsform der Erfindung dadurch erleichtert, dass in der Kavität Platzhalter vorgesehen sind und dass das oder die Faserbänder so in die Kavität eingebracht werden, dass sich die Platzhalter in den Aufnahmen befinden. Die Aussparungen in dem oder den Faserbändern werden beispielsweise auf die Platzhalter aufgesteckt oder auf diesen abgelegt. Bevorzugt entsprechen Größe und Form der Platzhalter denjenigen der Magnete, die in den Aufnahmen des Rotorkörpers angeordnet werden sollen.

In einer anderen Ausführungsform werden Magnete in der Kavität positioniert und das oder die Faserbänder werden so in die Kavität eingebracht, dass sich die Magnete in den Aufnahmen befinden. Die Magnete werden anfangs an den Stellen in der Kavität positioniert, an denen sie sich später nach Fertigstellung des Rotors auch befinden sollen. Das oder die Faserbänder werden dann um die Magnete herum in die Kavität eingebracht. Zu diesem Zweck sind in den Faserbändern die erfindungsgemäßen Aussparungen vorgesehen.

In einer weiteren Ausführungsform werden die oben genannten Platzhalter in der Kavität als Schieber ausgeführt, wie sie im Spritzgussformenbau verwendet werden. Dadurch können die Magnete erst nach dem Verpressen und Aushärten der Faser/Harz Mischung in die Aussparung geschoben werden. Dieses Verfahren ist besonders bei Harzen notwendig, die bei hohen Temperaturen aushärten, die die Magnete nicht aushalten, zum Beispiel bei Temperaturen größer 120 °C.

Das erfindungsgemäße Verfahren dient insbesondere zur Herstellung von Rotorkörpern und Rotoren für Elektromotoren. Solche Rotoren weisen häufig eine Vielzahl von Magneten auf, die sich alle genauso weit vom Zentrum, dem Drehpunkt des Rotors, entfernt befinden und zu ihren benachbarten Magneten jeweils denselben Abstand aufweisen. Es ist daher von Vorteil, auch die Faserbänder so zu fertigen und auszurichten, dass sich eine Vielzahl von Aufnahmen für Magnete bilden. Entsprechend weist der Rotorkörper von Vorteil einen kreisförmigen Querschnitt auf und die Aufnahmen sind äquidistant vom Kreiszentrum des Rotorkörpers vorgesehen.

Die Erfindung eignet sich auch zur Herstellung eines Rotors, bei dem die Magnete in mehr als einem Kreisring angeordnet sind. Beispielsweise können die Magnete in zwei konzentrischen Kreisen, einem inneren und einem äußeren Kreis, um die Drehachse des Rotorkörpers angeordnet sein. Die Aussparungen bzw.Aufnahmen werden dann dementsprechend vorgesehen. Hierbei ist es von Vorteil, die Aufnahmen winkelversetzt zueinander anzuordnen, das heißt, der Radius des Rotorkörpers schneidet maximal eine Aufnahme des inneren Kreises oder eine Aufnahme des äußeren Kreises, aber nicht beide Aufnahmen.

Nach dem Ausrichten des oder der Faserbänder werden diese von Vorteil in eine Matrix eingebettet. Als Matrix findet ein Polymer Verwendung, insbesondere ein Duromer (Duroplast, Kunstharz), ein Elastomer oder ein Thermoplast. Es ist ebenso möglich eine keramische Matrix zu verwenden.

Das Polymer wird vorzugsweise durch Druckerhöhung und/oder Temperaturerhöhung ausgehärtet und bildet dann nach dem Aushärten mit dem Fasermaterial einen Rotorkörper von sehr großer Festigkeit und zwar sowohl hinsichtlich Zug-, Druck- als auch Biegebeanspruchung.

In einer weiteren Ausführungsform wird der Rotorkörper aus kohlenstofffaserverstärktem Kunststoff (CFK) hergestellt. Es werden hierzu mehrere Lagen von Kohlenstofffasern in eine Kunststoff-Matrix aus Thermoplasten oder Duromeren, insbesondere aus Epoxidharz, eingebracht.

In einer anderen Ausführungsform der Erfindung wird der Faservolumengehalt, d.h. die Anzahl an Fasern pro Volumen, am Außenrand des Faserbandes erhöht. Hierzu werden beispielsweise am Außenrand die Kettfasern dichter gelegt als im restlichen Bereich des Faserbandes. Insbesondere ist es günstig, den Faservolumengehalt in den an die Aussparungen angrenzenden Bereichen des Faserbandes und/oder in den Stegen zwischen den Aussparungen zu erhöhen. Dadurch wird eine erhöhte Festigkeit hinsichtlich der Aufnahme der Zentrifugalkräfte, die auf die in den Aussparungen bzw. Aufnahmen einzubringenden Magneten wirken, sowie eine Verbesserung der Steifigkeit des Rotorkörpers insgesamt erzielt.

Die Erfindung sowie weitere Einzelheiten und Ausgestaltungen der Erfindung werden im Folgenden anhand der schematischen Zeichnungen näher erläutert. Hierbei zeigen die Figuren verschiedene Verfahrensschritte zur erfindungsgemäßen Herstellung eines Rotorkörpers:
- Figur 1: das Weben eines Faserbandes,
- Figur 2: ein gewobenes schraubenförmiges Faserband,
- Figur 3: das Einbringen des Faserbandes in eine Kavität,
- Figur 4: die in der Kavität angeordneten Platzhalter,
- Figur 5: das Inkontaktbringen des Faserbandes mit einer Matrix und das Aushärten des Rotorkörpers und
- Figur 6: einen erfindungsgemäß hergestellten Rotor.

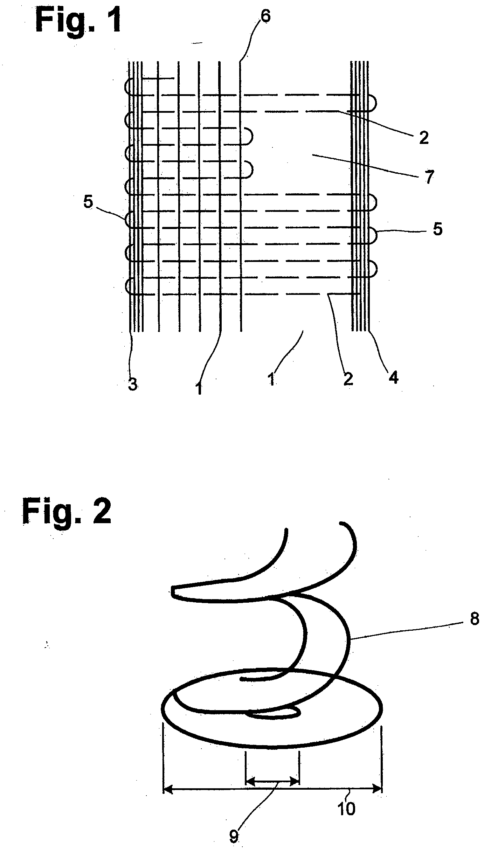

In den Figuren 1 bis 6 ist der erfindungsgemäße Fertigungsprozess eines Rotors für einen Elektromotor schematisch dargestellt, insbesondere für einen Elektromotor wie in DE 10 2006 036 707 beschrieben. Der Rotor wird aus einem Faserverbundwerkstoff gefertigt und weist eine Vielzahl von Magneten auf, die gleichmäßig und äquidistant von der Rotorachse angeordnet sind.

Der Rotor besitzt einen scheibenförmigen Rotorkörper, der aus einem Kohlenstofffaser-Kunststoff-Verbundwerkstoff besteht. Anstelle von Kohlenstofffasern können auch Glasfasern, Aramidfasern, Basaltfasern oder anderweitige Chemie- und Naturfasern, Fasern aus synthetischen Polymeren oder industriell erzeugt anorganische Fasern oder eine Kombination aus den genannten Fasern eingesetzt werden.

Zu dessen Herstellung werden zunächst Kohlenstofffasern zu einem schraubenförmigen Faserband gewebt. Mehrere sogenannte Kettfasern 1 bilden einen Träger, in den Schussfasern 2 eingezogen werden (siehe Figur 1). Die Fasern 1, 2 werden nach dem sogenannten Umkehrschussverfahren verwebt. Die Schussfasern 2 werden vorzugsweise rechtwinklig zu den Kettfasern 1 eingezogen. Nach dem Kreuzen der äußersten Kettfasern 3, 4 wird die Schussfaser 2 in umgekehrter Richtung zwischen die Kettfasern 1 eingezogen. Durch die Richtungsumkehr der Schussfasern 2 am Rand des herzustellenden Faserbandes wird dessen Randbereich verstärkt und stabile Kanten 5 bilden sich aus. Zudem werden in den Randbereichen die Kettfasern 1 dichter angeordnet, wodurch die Randbereiche zusätzlich verstärkt werden.

An bestimmten Stellen werden die Schussfasern 2 nicht über die gesamte Breite des herzustellenden Faserbandes, d.h. nicht von der äußersten Kettfaser 3 zu der entgegengesetzt äußersten Kettfaser 4, eingezogen. Der Verlauf einer Schussfaser 2 wird an einer zwischen den äußersten Kettfasern liegenden Kettfaser 6 umgekehrt ("halber Umkehrschuss"). Nach mehreren solcher halber Umkehrschüsse erfolgt wieder ein ganzer Schuss, d.h. die Schussfaser 2 wird von der äußersten Kettfaser 3 bis zur anderen äußersten Kettfaser 4 durchgezogen. Auf diese Weise bildet sich eine Aussparung oder Öffnung 7 aus, in der sich keine kreuzenden Kett- und Schussfasern befinden.

In der oben beschriebenen Weise wird ein langes schraubenförmiges Faserband 8 (siehe Figur 2) gefertigt, welches an vorbestimmten Stellen Aussparungen 7 aufweist. Das schraubenförmige Faserband 8 hat beispielsweise einen Innendurchmesser 9 zwischen 50 und 100 mm und einen Außendurchmesser 10 zwischen 250 und 300 mm.

Anstelle des oben beschriebenen, unmittelbaren Einwebens der Aussparungen 7 in das Faserband ist es auch möglich die Kettfasern 1 und Schussfasern 2 über die gesamte Breite und Länge des Faserbandes zu verweben und anschließend die Kettfasern 1 und Schussfasern 2 zu verschieben, so dass die gewünschten Aussparungen 7 entstehen.

Die Abmessungen des Faserbandes, insbesondere dessen Innendurchmesser 9 und dessen Außendurchmesser 10, werden in Abhängigkeit von der Größe des herzustellenden Rotors gewählt. Für übliche Elektromotoren und Generatoren liegt der Außendurchmesser 10 beispielsweise zwischen 150 mm und 600 mm. Es ist aber durchaus möglich, die Erfindung auch zur Fertigung von Rotoren elektrischer Maschinen mit größeren Abmessungen einzusetzen. Beispielsweise können mit dem erfindungsgemäßen Verfahren Rotorkörper mit einem Außendurchmesser zwischen 1000 mm und 3000 mm hergestellt werden, wie sie in Generatoren für Windkraftanlagen zum Einsatz kommen.

Die Länge des Faserbandes 8 wird so ausgelegt, dass das schraubenförmig aufeinandergelegte Faserband 8 nach dem Verpressen und Aushärten der Dicke des herzustellenden Rotorkörpers entspricht. Wegen der beim Pressen des Faserbandes auftretenden Kompaktierung muss eine bestimmte Überlänge für das Faserband einkalkuliert werden, d.h. das aufeinandergelegte Faserband 8 hat vor dem Verpressen eine größere Dicke als der endgültige Rotorkörper haben soll.

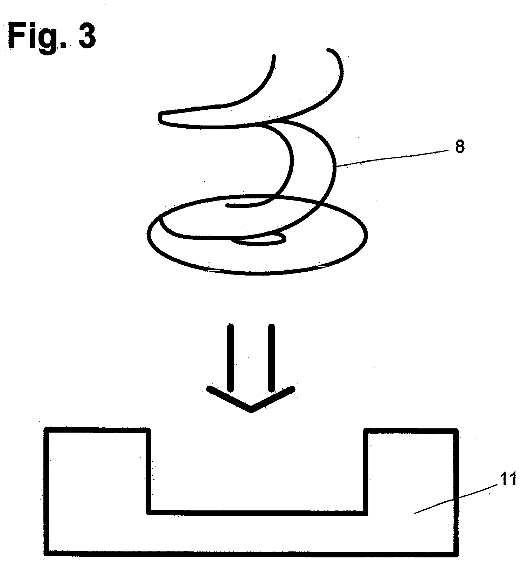

In einem nächsten Verfahrensschritt wird das Fasernband 8, wie in Figur 3 gezeigt, in eine Kavität 11 eingelegt. Die Kavität 11 entspricht der Negativform des gewünschten Rotorkörpers.

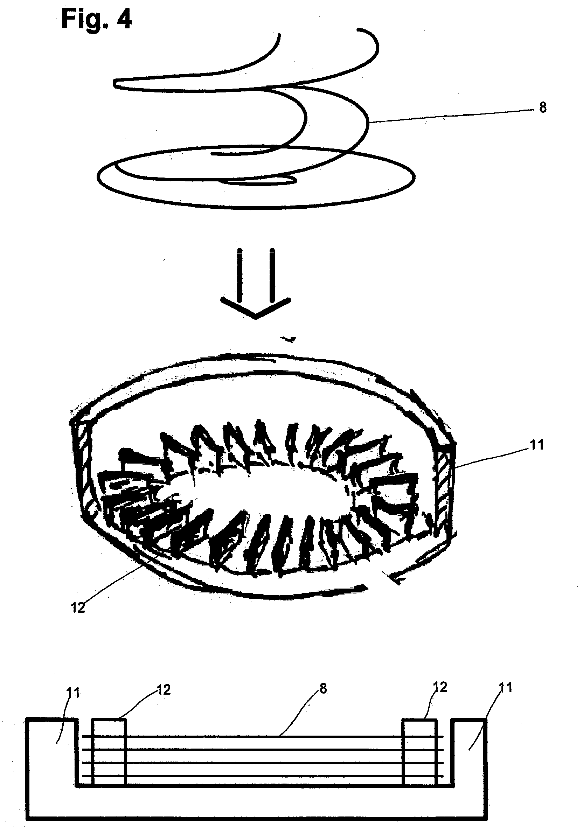

In Figur 4 ist ein Schnitt durch die Kavität 11 dargestellt. Am Boden der Kavität 11 sind eine Vielzahl von Platzhaltern 12 kreisförmig angeordnet. Die Platzhalter 12 können beispielsweise aus demselben Material bestehen wie die restliche Kavität 11 und sind mit dieser fest verbunden. Anstelle der festen Verbindung mit der Kavität 11 können die Platzhalter 12 auch beweglich, insbesondere verschiebbar, vorzugsweise verschiebbar in Richtung parallel zur Symmetrieachse der Kavität 11 und parallel zur Drehachse des herzustellenden Rotorkörpers (im Folgenden als z-Achse bezeichnet), vorgesehen sein. Die Platzhalter 12 befinden sich an den Stellen, an denen nach Fertigstellung des Rotorkörpers die Magnete vorgesehen sind.

Das Faserband 8 wird in die Kavität 11 eingebracht, wobei die Platzhalter 12 jeweils in die Aussparungen 7 in dem Faserband 8 eingreifen.

Nachdem das Faserband 8 bis zur gewünschten Dicke 13 in die Kavität eingelegt worden ist, wird ein als Matrix für den faserverstärkten Rotorkörper dienendes Polymer 14 in die Kavität 11 eingebracht. Das Polymer 14 ist vorzugsweise ein Duroplast, Elastomer oder Thermoplast, beispielsweise ein Kunstharz oder ein Epoxidharz, oder ein keramischer Werkstoff. Alternativ kann das vorgefertigte Faserband bereits mit einem Polymer getränkt sein.

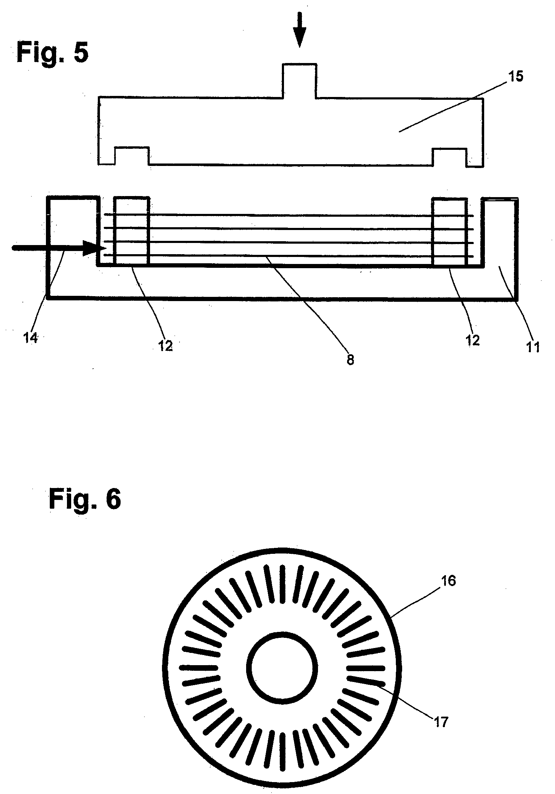

Das Faserband 8 wird auf diese Weise in eine Polymermatrix 14 eingebettet. Das Polymer 14 wird dann durch Temperatur- und Druckerhöhung ausgehärtet. Die Kavität 11 wird hierzu erwärmt und das in der Kavität 11 befindliche Faserband 8 wird zum Beispiel mittels eines Stempels 15 zusammengepresst (Figur 5).

Nach dem Aushärten des Faserband-Polymer-Verbundes wird der entstandene Rotorkörper 16 der Kavität 11 entnommen. Der hergestellte Rotorkörper 16 ist ring- und scheibenförmig und weist eine Vielzahl von kreisförmig angeordneten Aufnahmen 17 auf. Die Aufnahmen 17 befinden sich an den Stellen, die durch die Platzhalter 12 frei gehalten wurden.

In die Aufnahmen 17 werden abschließend Magnete eingebracht und in den Aufnahmen fixiert, beispielsweise in die Aufnahmen 17 eingeklebt.

Die Erfindung erlaubt so, in einem durchgehenden Fertigungsprozess einen Rotorkörper 16 mit Aufnahmen 17 zu fertigen. Der bisher notwendige Verfahrensschritt, in den Rotorkörper 16 Aufnahmen 17 für Magnete zu bohren, zu schneiden, zu fräsen oder wasserstrahlen oder anderweitig einzubringen, entfällt.

In einer anderen Ausführungsform der Erfindung werden in dem in Figur 4 gezeigten Verfahrensschritt die Magnete, die in dem fertigen Rotorkörper 16 angeordnet werden sollen, als Platzhalter 12 verwendet. Die Magnete werden wie bei der oben beschriebenen Ausführungsform an den gewünschten Positionen in der Kavität 11 fixiert oder durch ein Schiebersystem in die Aussparungen in Richtung der z-Achse eingeschoben. Dabei können die beweglichen Platzhalter in die untere Hälfte der Kavität 11 oder in den Stempel 15 geschoben werden.

Nach dem Einfüllen/Injizieren bzw. durch Vakuuminfusion des Polymers 14, beispielsweise eines Kunstharzes, in die Kavität 11, dem Pressen und dem Aushärten des aus dem Faserband 8 und dem Polymer 14 bestehenden Verbundwerkstoffs sind die Magnete fest in den Rotorkörper 16 eingebettet und mit dem Faserband 8 vergossen. Bei dieser Ausführungsvariante der Erfindung kann der komplette Rotor aus Rotorkörper 16 und Magneten in einem durchgängigen Prozess gefertigt werden.

Der erfindungsgemäß hergestellte Rotorkörper 16 wird bevorzugt als Rotor in einem Elektromotor oder Generator, beispielsweise einer Transversalflussmaschine, eingesetzt.

## Patentansprüche

1. Verfahren zur Herstellung eines Rotorkörpers (16), wobei aus Fasermaterial (1,2) ein oder mehrere Faserbänder (8) gefertigt werden, **dadurch gekennzeichnet, dass** in dem oder den Faserbändern Aussparungen (7) vorgesehen werden, und dass das Faserband oder die Faserbänder so zueinander ausgerichtet werden, dass mindestens eine der Aussparungen auf einer anderen der Aussparungen liegt, so dass übereinander liegende Aussparungen eine dreidimensionale Aufnahme (17) für Magnete bilden.

2. Verfahren nach Anspruch 1, **dadurch gekennzeichnet, dass** mehrere ringsegment-förmige oder kreisringförmige Faserbänder (8) mit jeweils ein oder mehreren Aussparungen (7) gefertigt werden.

3. Verfahren nach Anspruch 1, **dadurch gekennzeichnet, dass** ein schraubenförmiges Faserband (8) mit mehreren Aussparungen (7) gefertigt wird.

4. Verfahren nach einem der Ansprüche 1 bis 3, **dadurch gekennzeichnet, dass** das Faserband oder die Faserbänder (8) in eine Kavität (11) eingebracht werden.

5. Verfahren nach Anspruch 4, **dadurch gekennzeichnet, dass** in der Kavität (11) Platzhalter (12) und/oder Magnete vorgesehen sind und dass das oder die Faserbänder (8) so in die Kavität eingebracht werden, dass sich die Platzhalter und/oder die Magnete in den Aufnahmen (17) befinden.

6. Verfahren nach einem der Ansprüche 1 bis 5, **dadurch gekennzeichnet, dass** der Rotorkörper (16) einen kreisförmigen Querschnitt aufweist und dass die Aufnahmen (17) äquidistant vom Kreiszentrum des Rotorkörpers vorgesehen sind.

7. Verfahren nach einem der Ansprüche 1 bis 6, **dadurch gekennzeichnet, dass** das Faserband oder die Faserbänder (8) durch Weben gefertigt werden.

8. Verfahren nach Anspruch 7, **dadurch gekennzeichnet, dass** die Aussparungen (7) in das oder die Faserbänder (8) gewebt werden.

9. Verfahren nach Anspruch 7 oder 8, **dadurch gekennzeichnet, dass** nach dem Weben des Faserbandes (8) ein Teil des Fasermaterials (1,2) des Faserbandes so verschoben wird, dass sich Aussparungen (7) in dem Faserband bilden.

10. Verfahren nach einem der Ansprüche 1 bis 9, **dadurch gekennzeichnet, dass** die Anzahl der Fasern pro Volumen in einem Randbereich des Faserbandes (8) höher ist als die durchschnittliche Anzahl der Fasern pro Volumen des Faserbandes.

11. Verfahren nach einem der Ansprüche 1 bis 10, **dadurch gekennzeichnet, dass** das oder die Faserbänder (8) nach dem Ausrichten mit einem Polymer, insbesondere einem Duromer, Elastomer oder Thermoplast, in Kontakt gebracht werden.

12. Verfahren nach Anspruch 11, **dadurch gekennzeichnet, dass** das Polymer insbesondere durch Druckerhöhung und/oder Temperaturerhöhung ausgehärtet wird.

13. Verfahren nach Anspruch 12, **dadurch gekennzeichnet, dass** nach dem Aushärten Magnete in die Aufnahmen (17) des Rotorkörpers (16) eingebracht werden.

14. Verfahren nach einem der Ansprüche 1 bis 13, **dadurch gekennzeichnet, dass** der Rotorkörper (16) aus kohlenstofffaserverstärktem Kunststoff (CFK) hergestellt wird.

15. Rotor für einen Elektromotor mit einem Rotorkörper (16) hergestellt mittels eines Verfahrens nach einem der Ansprüche 1 bis 14, wobei sich in den Aufnahmen (17) Magnete, insbesondere Permanentmagnete, befinden.

## Claims

1. Method for producing a rotor body (16), wherein one or several fiber strips (8) are produced from fiber material (1, 2), **characterized in that** in the fiber strip or in the the fiber strips, recesses (7) are provided, and that the fiber strip or the fiber strips are aligned to each other in such a way that at least one of the recesses lies upon one of the other recesses, so that recesses lying one above the other form a three-dimensional socket (17) for magnets.

2. Method according to claim 1, **characterized in that** several ring segment shaped or circular ring shaped fiber strips (8) with one or several recesses (7) each are produced.

3. Method according to claim 1, **characterized in that** a helical fiber strip (8) with several recesses (7) is produced.

4. Method according to one of the claims 1 to 3, **characterized in that** the fiber strip or the fiber strips (8) are inserted into a cavity (11).

5. Method according to claim 4, **characterized in that** placeholders (12) and/or magnets are provided in the cavity (11) and that the fiber strip or the fiber strips (8) are inserted into the cavity in such a way that the placeholders and/or the magnets are situated in the sockets (17).

6. Method according to one of the claims 1 to 5, **characterized in that** the rotor body (16) comprises a circular cross section and that the sockets (17) are provided equidistant to the circle center of the rotor body.

7. Method according to one of the claims 1 to 6, **characterized in that** the fiber strip or the fiber strips (8) are manufactured by weaving.

8. Method according to claim 7, **characterized in that** the recesses (7) are woven into the fiber strip or the fiber strips (8).

9. Method according to claim 7 or 8, **characterized in that** after the weaving of the fiber strip (8), a part of the fiber material (1, 2) of the fiber strip is shifted in such a way that recesses (7) are forming in the fiber strip.

10. Method according to one of the claims 1 to 9, **characterized in that** the number of fibers per volume is higher in a periphery of the fiber strip (8) than the average number of fibers per volume of the fiber strip.

11. Method according to one of the claims 1 to 10, **characterized in that** the fiber strip or the fiber strips (10) are put into contact with a polymer, particularly a duromer, elastomer or thermoplast after the alignment.

12. Method according to claim 11, **characterized in that** the polymer is hardened, in particular by increasing pressure and/or increasing temperature.

13. Method according to claim 12, **characterized in that** after hardening, magnets are inserted into the sockets (17) of the rotor body (16).

14. Method according to one of the claims 1 to 13, **characterized in that** the rotor body (16) is made from carbon fiber reinforced plastic (CFRP).

15. Rotor for an electric motor with a rotor body (16) produced by means of a method according to one of the claims 1 to 14, wherein magnets, in particular permanent magnets, are in the sockets (17) of the magnets.

## Revendications

1. Procédé de production d'un corps de rotor (16), dans lequel une ou plusieurs bandes fibreuses (8) sont fabriquées en matière fibreuse (1, 2), **caractérisé en ce que** des évidements (7) sont prévus dans la ou les bandes fibreuses et **en ce que** la ou les bandes fibreuses sont arrangées l'une par rapport à l'autre de sorte qu'au moins un des évidements repose sur un autre des évidements, de sorte que des évidements superposés forment un logement (17) en trois dimensions pour des aimants.

2. Procédé selon la revendication 1, **caractérisé en ce que** plusieurs bandes fibreuses (8) formant des segments annulaires ou formant des anneaux circulaires comportant respectivement un ou plusieurs évidements (7) sont fabriquées.

3. Procédé selon la revendication 1, **caractérisé en ce qu'**une bande fibreuse (8) en forme de vis comportant plusieurs évidements (7) est fabriquée.

4. Procédé selon l'une des revendications 1 à 3, **caractérisé en ce que** la ou les bandes fibreuses (8) sont introduites dans une cavité (11).

5. Procédé selon la revendication 4, **caractérisé en ce que** des espaces réservés (12) et/ou des aimants sont prévus dans la cavité (11) et **en ce que** la ou les bandes fibreuses (8) sont introduites dans la cavité de manière à ce que les espaces réservés et/ou les aimants se trouvent dans les logements (17).

6. Procédé selon l'une des revendications 1 à 5, **caractérisé en ce que** le corps de rotor (16) présente une section transversale de forme circulaire et **en ce que** les logements (17) sont prévus à équidistance du centre du cercle du corps de rotor.

7. Procédé selon l'une des revendications 1 à 6, **caractérisé en ce que** la ou les bandes fibreuses (8) sont fabriquées par tissage.

8. Procédé selon la revendication 7, **caractérisé en ce que** les évidements (7) sont tissés dans la ou les bandes fibreuses (8).

9. Procédé selon la revendication 7 ou 8, **caractérisé en ce qu'**après le tissage de la bande fibreuse (8), une partie de la matière fibreuse (1, 2) de la bande fibreuse est repoussée de manière à créer les évidements (7) dans la bande fibreuse.

10. Procédé selon l'une des revendications 1 à 9, **caractérisé en ce que** le nombre de fibres par volume dans une zone périphérique de la bande fibreuse (8) est supérieur au nombre moyen de fibres par volume de la bande fibreuse.

11. Procédé selon l'une des revendications 1 à 10, **caractérisé en ce que** la ou les bandes fibreuses (8) sont mises en contact avec un polymère, en particulier un duromère, un élastomère ou une matière thermoplastique après l'orientation.

12. Procédé selon la revendication 11, **caractérisé en ce que** le polymère est durci notamment par élévation de la pression et/ou de la température.

13. Procédé selon la revendication 12, **caractérisé en ce que** des aimants sont introduits dans les logements (17) du corps de rotor (16) après le durcissement.

14. Procédé selon l'une des revendications 1 à 13, **caractérisé en ce que** le corps de rotor (16) est fabriqué en polymère renforcé de fibres de carbone (PRFC).

15. Rotor de moteur électrique comportant un corps de rotor (16) fabriqué au moyen d'un procédé selon l'une des revendications 1 à 14, dans lequel les logements (17) accueillent des aimants, notamment des aimants permanents.
